# EUROPÄISCHE PATENTSCHRIFT

(11) **EP 3 145 296 B1**
(45) Veröffentlichungstag und Bekanntmachung des Hinweises auf die Patenterteilung: **11.12.2019**
(21) Anmeldenummer: 15726056.3
(22) Anmeldetag: 21.05.2015
(51) Int. Cl.: A01K 1/12, A01K 1/00

(54) **VORRICHTUNG ZUM GELENKTEN TIERVERKEHR**
DEVICE FOR STEERED ANIMAL TRAFFIC
DISPOSITIF DE CIRCULATION DIRIGÉE D'ANIMAUX

(30) Priorität: 22.05.2014 DE 102014107233
(43) Veröffentlichungstag der Anmeldung: 29.03.2017
(73) Patentinhaber: GEA Farm Technologies GmbH, 59199 Bönen (DE)
(72) Erfinder: SCHOMAKER, Michael, 59302 Oelde (DE); BEIWINKEL, Heinz-Josef, 33378 Rheda-Wiedenbrück (DE); BARBA, Marcelo, 48351 Alverskirchen (DE)
(74) Vertreter: KNH Patentanwälte Neumann Heine Taruttis PartG mbB
(86) Internationale Anmeldenummer: PCT/EP2015/061228
(87) Internationale Veröffentlichungsnummer: WO 2015/177269

(56) Entgegenhaltungen:
- EP-A1- 0 582 350
- EP-A2- 1 300 067
- EP-A2- 2 149 296
- EP-A2- 2 269 445
- NL-A- 7 413 707

## Beschreibung

Der Gegenstand der Erfindung bezieht sich auf eine Vorrichtung zum gelenkten Tierverkehr, insbesondere von Kühen.

Im Zusammenhang mit Vorrichtungen zum automatischen Melken von Tieren, wie z. B. Kühen, ist bekannt, dass automatische oder vollautomatische Melkvorrichtungen verwendet werden. Im Zuge der Automatisierung wird bevorzugt ein Melkroboter zum Melken eines Tiers verwendet. Es ist bekannt, dass ein Melkstand, der den wenigstens einen Melkroboter umfasst, zwischen zwei aufeinanderfolgenden Bereichen vorgesehen ist.

Durch die EP 0 619 702 A1 ist eine Vorrichtung zum automatischen Melken von Tieren bekannt. Die Vorrichtung weist einen Melkroboter auf. Des Weiteren weist die Vorrichtung mindestens zwei umschlossene Bereiche auf, in denen sich Tiere frei bewegen können, wobei die Vorrichtung ein System von Türen, Toren oder ähnlichen Vorrichtungen aufweist, die sich in einer Richtung öffnen, so dass der Weg und die Richtung festgelegt sind, auf dem bzw. in der die Tiere zu dem Melkroboter hin und von ihm weggehen können. Die Bereiche, in denen sich die Tiere aufhalten können, sind aufeinanderfolgend angeordnet. Das Tier kann aus einem ersten Bereich der aufeinanderfolgenden Bereiche über den Melkroboter in einen zweiten Bereich der aufeinanderfolgenden Bereiche gehen. Aus der EP 0 619 702 A1 ist bekannt, dass auch weitere Bereiche vorgesehen sein können, so dass die Tiere im Sinne eines Rundlaufs durch die einzelnen Bereiche hindurchtreten können. Bei den Bereichen kann es sich um eine Weide oder einen Stall handeln. Der Stall als solcher kann wiederum in unterschiedliche Bereiche aufgeteilt sein. Bei diesen Bereichen kann es sich bspw. um Fütterungsbereiche oder Liegebereiche für die Tiere handeln.

Auch durch die US Schrift 4,715,322 ist eine Vorrichtung zum gelenkten Tierverkehr bekannt. Die Tiere, die sich in einzelnen Bereichen oder Sektoren befinden, werden durch entsprechend gesteuerte Tore zu einem Melkstand geleitet und von diesem wieder weg.

Eine weitere Ausführungsform einer Vorrichtung für einen gelenkten Tierverkehr ist durch die EP 0 582 350 A1 bekannt. Diese Vorrichtung weist mindestens drei Sektoren auf. Die Sektoren sind unmittelbar mit einem Melkstand verbunden und zwar derart, dass jeder Sektor mit dem Melkstand über einen anderen Sektor verbunden ist, so dass der Melkstand von zu einer Gruppe gehörenden noch zu melkenden Kühen nacheinander von einem der Sektoren zu betreten und nach dem Melken zu verlassen ist, wobei die Kühe in einen anderen Sektor geleitet werden. Bei den Sektoren kann es sich um Weiden handeln. Die Fig. 13-16 der EP 0 582 350 A1 zeigen, dass in Abhängigkeit davon, von welchem Sektor Tiere über den Melkstand in einen anderen Sektor gelangen sollen, sehr komplizierte Laufwege vorhanden sind. Des Weiteren besteht bei der durch die EP 0 582 350 A1 bekannten Vorrichtung das Problem, dass Tiere von der Weide, auf der sie sich befinden, zwar zum Melkroboter geführt werden können, von dort aus jedoch nicht wieder auf dieselbe Weide zurückgeführt werden können.

Hiervon ausgehend liegt der vorliegenden Erfindung die Zielsetzung zugrunde, eine Vorrichtung zum gelenkten Tierverkehr bereitzustellen, welche konstruktiv einfach ausgebildet und an die Tiere bzw. deren Verhalten angepasst ist.

Diese Aufgabe wird erfindungsgemäß durch eine Vorrichtung zum gelenkten Tierverkehr mit den Merkmalen des Anspruchs 1 gelöst. Vorteilhafte Weiterbildungen und Ausgestaltungen der erfindungsgemäßen Vorrichtung sind Gegenstand der abhängigen Ansprüche. Die in den Ansprüchen einzeln angeführten Merkmale sind in beliebiger, technologisch sinnvoller Weise, miteinander kombinierbar und können durch erläuternde Sachverhalte aus der Beschreibung ergänzt werden, wobei weitere Ausführungsvarianten der Erfindung aufgezeigt werden.

Die erfindungsgemäße Vorrichtung zum gelenkten Tierverkehr weist wenigstens drei Sektoren auf. Bei den Sektoren kann es sich um Weiden und/oder Stallbereiche, wie z. B. Liegebereiche, Fütterungsbereiche etc. handeln. Die Sektoren sind über einen Rundgang miteinander verbunden. Hierzu weist der Rundgang jeweils einen Abschnitt auf, der einen Übergangsbereich von einem Sektor in den Rundgang bildet. Der Abschnitt weist ein Schwenktor auf, welches einen Eintritt eines Tiers aus einem Sektor in den Rundgang und nur eine Laufrichtung des Tiers in dem Rundgang ermöglicht. In Laufrichtung des Tiers betrachtet ist dem Schwenktor eine Selektionseinheit nachgeordnet. Mittels der Selektionseinheit kann das oder ein Tier in den Sektor zurückgelenkt oder gelenkt werden. Die Selektionseinheit ermöglicht auch, dass das Tier in dem Rundgang weiter laufen kann.

Dadurch, dass Selektionseinheiten vorgesehen sind, können die Tiere von einem Sektor über den Rundgang in einen anderen Sektor gelangen. Die Tiere laufen in dem Rundgang, wobei die Laufrichtung bspw. im Uhrzeigersinn sein kann. Unter dem Begriff "Rundgang" ist nicht zwingend ein Gang zu verstehen, der einen konstanten Radius hat. Es besteht auch die Möglichkeit, dass der Rundgang durch einen Polygonzug gebildet ist.

Dadurch, dass ein Rundgang vorgesehen ist, können die Tiere aus einem Sektor in einen anderen Sektor oder in den Sektor gelenkt, aus dem sie kommen, wieder zurückgeleitet werden. Dies kann unmittelbar durch die Selektionseinheit oder mittelbar dadurch, dass das Tier den gesamten Rundgang durchläuft, erfolgen.

Innerhalb einer Tierherde haben Tiere unterschiedliche Ränge. In Abhängigkeit vom Rang des Tiers verhalten sich auch die rangniedrigeren Tiere bei einer Begegnung mit einem ranghöheren Tier. So besteht bspw. bei einem gelenkten Tierverkehr, der sich kreuzende Wege hat, das Problem, dass die Anwesenheit eines ranghöheren Tiers ein Durchlaufen der rangniedrigeren Tiere behindern kann, so dass es zu einer Staubildung in dem Kreuzungsbereich der Wege der Tiere kommen kann. Um dies zu vermeiden, wird gemäß der erfindungsgemäßen Ausgestaltung der Vorrichtung zum gelenkten Tierverkehr vorgeschlagen, dass Schwenktore vorgesehen sind. Schwenktore bestimmten zum einen die Laufrichtung des Tiers innerhalb des Rundgangs. Zum anderen wird durch die Schwenktore ein Einfädeln der Tiere in den Rundgang ermöglicht.

Die erfindungsgemäße Vorrichtung zum gelenkten Tierverkehr ist insbesondere vorteilhaft, wenn diese mit wenigstens einem Melkbereich kombiniert wird. Der Melkbereich weist vorzugsweise wenigstens ein automatisches Melksystem (AMS), welches vorzugsweise vollautomatisch arbeitet, auf. Es besteht auch die Möglichkeit, dass der Melkbereich wenigstens einen halbautomatischen oder manuellen Melkbereich umfasst. Der Melkbereich weist wenigstens ein automatisches Melksystem auf, welches die Tiere, insbesondere freiwillig, getrieben oder in Tiergruppen getrieben, aufsuchen können. So können die Tiere nach dem Aufsuchen des Melkbereichs in den ursprünglichen Sektor zurückgelangen.

Die Erfindung als solche ermöglicht auch die Gruppierung von Tieren. So besteht die Möglichkeit, dass Tiere einer Gruppe, die sich in einem Sektor befinden, einer Tiergruppe, die in einem anderen Sektor ist, zugeführt werden können. Das Zuführen der Tiere muss nicht unter Aufsicht einer Person oder unter Beihilfe einer Person erfolgen.

Der Melkbereich kann bevorzugt ein Teil des Rundgangs sein. Bei einer solchen vorteilhaften Ausgestaltung der Erfindung gehen sämtliche Tiere durch den Melkbereich, in dem sie gemolken werden können.

Besonders bevorzugt ist eine Ausgestaltung der erfindungsgemäßen Vorrichtung zum gelenkten Tierverkehr, bei der ein Melkbereich vorgesehen ist, der mit dem Rundgang verbunden ist. Hierzu ist ein Zugang und ein Ausgang vorgesehen. Innerhalb des Rundgangs ist eine Selektionseinheit vorgesehen, mittels derer ein Tier in den Melkbereich gelenkt wird oder den Rundgang weiter laufen kann. Am Ausgang ist ein Schwenktor vorgesehen, welches einen Eintritt eines Tiers aus dem Melkbereich in den Rundgang und nur eine Laufrichtung des Tiers in dem Rundgang ermöglicht.

Der besondere Vorteil einer solchen Ausgestaltung der Vorrichtung kann auch darin gesehen werden, dass die Tiere relativ schnell an den Tierverkehr gewöhnt werden können, da die Wege, die sie absolvieren müssen, unkompliziert sind. Des Weiteren hat die Vorrichtung den Vorteil, dass für die Tiere im Wesentlichen stets die gleichen Komponenten Selektionseinheit und Schwenktor erscheinen, so dass eine einfache Konditionierung der Tiere ermöglicht wird. Dies hat insbesondere dann Vorteile, wenn die Herde teilweise oder ganz durch Tiere ausgetauscht oder ergänzt wird. Auch rangniedrige Tiere können den Rundgang bzw. dem Tierverkehr folgen, ohne dass sie auf ein Leittier angewiesen sind.

Gemäß einer noch weiteren vorteilhaften Ausgestaltung der Erfindung wird vorgeschlagen, dass wenigstens ein Bereich vorgesehen ist, der über einen Zugang mit dem Rundgang verbunden ist, wobei eine Selektionseinheit im Rundgang vorgesehen ist, mittels derer ein Tier in den wenigstens einen Bereich gelenkt wird oder den Rundgang weiter laufen kann.

Bei dem wenigstens einen Bereich kann es sich um einen Separationsbereich handeln, in den vorbestimmte Tiere gelangen sollen. Der wenigstens eine Bereich kann auch ein Behandlungsbereich sein, in dem ein Tier behandelt werden soll. Der wenigstens eine Bereich kann auch mit einer Melkeinrichtung ausgestattet sein, bspw. wo Tiere, deren Milch nicht in Verbindung mit verkehrfähiger Milch gebracht werden soll.

Bevorzugt ist eine Ausgestaltung einer Vorrichtung, bei der der wenigstens eine Bereich über einen Ausgang mit dem Rundgang verbunden ist, wobei im Ausgang ein Schwenktor angeordnet ist, welches einen Eintritt eines Tiers aus dem wenigstens einen Bereich in den Rundgang und nur eine Laufrichtung des Tiere in dem Rundgang ermöglicht.

Die Selektionseinheiten und/oder die Schwenktore sind gemäß einer weiteren vorteilhaften Ausgestaltung automatisch betätigbar und steuerbar. Dazu weist die Vorrichtung eine Steuereinrichtung auf. Die Steuereinrichtung kann Bestandteil eines umfassenden Herdenmanagementsystems sein, welches auch die Zuordnung der Tiere zu einzelnen Gruppen und/oder Sektoren ermöglicht. Die Selektionseinheiten und/oder Schwenktore weisen vorzugsweise Mittel zur Identifikation von Tieren auf, wobei die Mittel signaltechnisch mit der Steuereinrichtung verbunden sind, so dass mit einfachen Maßnahmen eine vollautomatische Steuerung der Vorrichtung ermöglicht ist.

Die Erfindung wird anhand der in der Zeichnung dargestellten bevorzugten Ausführungsbeispiele erläutert, ohne dass der Gegenstand der Erfindung auf diese konkreten Ausgestaltungen beschränkt wird. Es zeigen:
- Fig. 1:: ein erstes Ausführungsbeispiel einer Vorrichtung zum gelenkten Tierverkehr,
- Fig. 2:: vergrößert einen Ausschnitt aus der Vorrichtung nach Fig. 1, und
- Fig. 3:: ein zweites Ausführungsbeispiel der Vorrichtung zum gelenkten Tierverkehr.

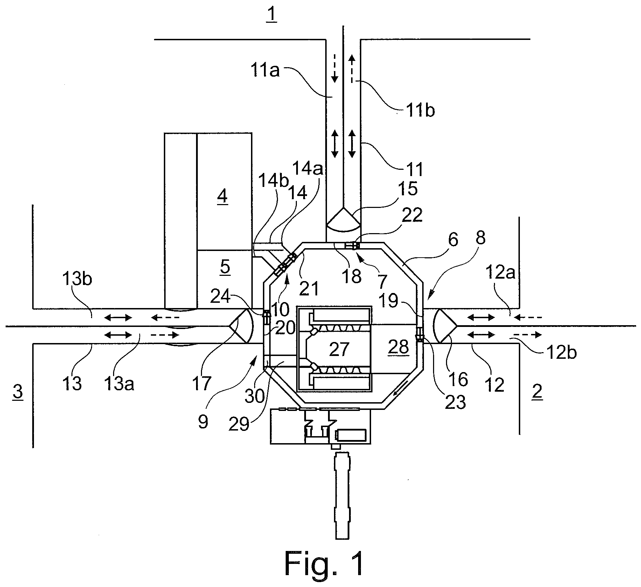

In Fig. 1 ist ein erstes Ausführungsbeispiel einer Vorrichtung zum gelenkten Tierverkehr dargestellt. Die Vorrichtung umfasst Sektoren 1-5, in denen sich Tiere aufhalten und vorzugsweise frei bewegen können. Bei den Sektoren 1, 2 und 3 handelt es sich vorzugsweise um Weiden. Bei den Sektoren 4 und 5 handelt es sich bevorzugt um Separationsbereiche, in die vorbestimmte Tiere gelangen können. Mit dem Bezugszeichen 6 ist ein Rundgang bezeichnet. Der Rundgang 6 ist über jeweils einen Gang 11-14 mit den Sektoren 1-5 verbunden. Tiere können aus einem Sektor über den zum Sektor zugehörigen Gang in den Rundgang und von dort in einen anderen oder denselben Sektor gelangen. Der Sektor 1 ist bspw. über den Gang 11 mit dem Rundgang 6 verbunden.

In dem dargestellten Ausführungsbeispiel nach Fig. 1 weist jeder Gang 11-14 einen Laufgang 11a-14a und einen Laufgang 11b-14b auf. Die Laufgänge 11a-14a und die Laufgänge 11b-14b können durch entsprechende Zäune voneinander getrennt sein. Aus der Darstellung in der Fig. 1 ist ersichtlich, dass Weichen 15-17 in den Gängen 11-13 vorgesehen sind. Mittels der Weichen 15-17 kann ein Laufgang 11a-13a oder ein Laufgang 11b-13b frei gegeben oder gesperrt werden. In dem Laufgang 11a-14a können Tiere aus einem Sektor in den Rundgang 6 gelangen. Aus dem Rundgang 6 können die Tiere über den gleichen Laufgang 11a-14a in den jeweiligen Sektor 1-5 gelangen. Es ist nicht zwingend, dass die Laufgänge 11a-11b; 12a-12b, 13a-13b; 14a-14b unmittelbar benachbart zueinander sind. Wird festgestellt, dass beispielsweise ein Laufgang 11a durch Regen oder andere Ereignisse für die Tiere schwer oder nicht passierbar ist, so wird der Laufgang 11a durch die Weiche 15 gesperrt und der Laufgang 11b für die Tiere freigegeben. Es besteht auch die Möglichkeit einen Gang so auszugestalten, dass dieser einen Laufgang aufweist, in dem Tiere nur vom Sektor zum Rundgang gelangen können, und einen Laufgang aufweist, in dem Tiere nur vom Rundgang in einen Sektor gelangen können. Dies kann vorzugsweise durch eine entsprechende Stellung der Weiche in dem Gang realisiert werden. In dem in der Figur 1 dargestellten Ausführungsbeispiel sind die Laufgänge 11a-14a für die Tiere freigegeben. Die Laufgänge 11b-14b sind durch die entsprechende Weichen 15-17 gesperrt. Die Tiere gelangen von und zu einem Sektor über den jeweiligen Laufgang 11a-14a. In Folgenden wird beschrieben, dass die Tiere den jeweiligen Laufgang 11a-14a benutzen, ohne dass der Gegenstand der Erfindung auf diese Ausführungsform beschränkt wird.

Jeweils ein Abschnitt 7-10 bildet einen Übergangsbereich von einem Sektor 1-5 in den Rundgang 6. Jeder Abschnitt 7-10 weist ein Schwenktor 18-21 auf. Jedes Schwenktor 18-21 ermöglicht einen Eintritt eines Tiers aus einem Sektor über einen Gang in den Rundgang 6. Die Schwenktore 18-21 sind so angeordnet, dass die Laufrichtung des Tiers bzw. der Tiere in dem Rundgang vorgegeben ist. In dem dargestellten Ausführungsbeispiel nach Fig. 1 laufen die Tiere im Uhrzeigersinn. Benachbart zu dem jeweiligen Schwenktor 18-21 ist in Laufrichtung der Tiere betrachtet jeweils eine Selektionseinheit 22-26 vorgesehen. Mittels der Selektionseinheit kann ein sich im Rundgang befindendes Tier entweder in einen Gang und somit auch in einen Sektor gelenkt werden. Alternativ besteht auch die Möglichkeit, dass die Selektionseinheit ein Weiterlaufen eines Tiers im Rundgang 6 ermöglicht.

Die Selektionseinheiten 22-26 und/oder die Weichen 15-17 sind vorzugsweise mit Tieridentifikationsmitteln, welche nicht dargestellt sind, ausgestattet, so dass die Weichen und/oder die Selektionseinheiten in Abhängigkeit von tierindividuellen Vorgaben aktiviert bzw. deaktiviert werden können. Dies ist nicht zwingend notwendig. Es besteht auch die Möglichkeit, dass die Weichen 15-17 sowie die Selektionseinheiten 22-26 manuell oder halbautomatisch betätigbar sind.

Dadurch, dass die Schwenktore 18-21 mit den Selektionseinheiten 22-26 die Laufrichtung des Tiers bestimmen, wird ein im Wesentlichen kreuzungsfreier Tierverkehr erreicht und somit auch die Bildung von Ansammlungen an Kreuzungen vermieden, was insbesondere dann auftritt, wenn ein ranghohes Tier sich im Kreuzungsbereich befindet.

Die Vorrichtung ist im Wesentlichen so ausgebildet, dass die Abfolge von Schwenktor und Selektionseinheit für das Tier abhängig vom Standort im Rundgang im Wesentlichen stets gleich aussieht, so dass auch eine schnelle Gewöhnung eines Tiers an den Rundgang und die Abfolge ermöglicht wird.

In dem in der Fig. 1 dargestellten Ausführungsbeispiel ist ein Melkbereich 27 vorgesehen. Der Melkbereich 27 kann einen Sektor im Sinne der Erfindung darstellen. Der Melkbereich 27 ist in dem dargestellten Ausführungsbeispiel von dem Rundgang 6 umgeben und über den Zugang 28 und den Ausgang 29 mit diesem verbunden. Der Zugang 28 zum Melkbereich 27 ist benachbart zum Abschnitt 8 ausgebildet. Dies ist nicht zwingend notwendig. Es besteht auch die Möglichkeit, dass der Zugang 28 bspw. zum Abschnitt 7 oder 9 zugeordnet ist. Mit dem Zugang 28 ist die Selektionseinheit 23 gekoppelt. Die Selektionseinheit 23 ist so ausgebildet, dass diese für ein Tier drei unterschiedliche Wegemöglichkeiten schafft. Zum einen kann ein Tier aus dem Rundgang durch die Selektionseinheit 23 ihren Weg im Rundgang 6 fortsetzen. Soll das Tier gemolken werden, so wird das Tier aus dem Rundgang 6 über die Selektionseinheit 23 in den Zugang 28 geleitet. Da die Selektionseinheit 23 auch dem Gang 12 zugeordnet ist, kann ein Tier aus dem Rundgang 6 in den Laufgang 12a über die Selektionseinheit 23 gelangen.

Das Vorsehen einer Drei-Wege-Selektionseinheit 23 hat den Vorteil, dass der apparative und konstruktive Aufwand verringert wird. Soll die Vorrichtung aus im Wesentlichen gleichen Teilen aufgebaut sein, so besteht die Möglichkeit, eine Selektionseinheit vorzusehen, die lediglich zwei Wege ermöglicht, wobei dann zwei solche Selektionseinheiten notwendig sind.

Ist das Tier im Melkbereich 27 bspw. mittels eines Melkroboters gemolken worden, so verlässt das Tier den Melkbereich 27 über den Ausgang 29. Aus der Darstellung nach Fig. 1 ist ersichtlich, dass im Übergangsbereich zwischen dem Rundgang 6 und dem Ausgang 29 ein Schwenktor 30 vorgesehen ist, durch welches das Tier in eine vorgegebene Laufrichtung in den Rundgang 6 eintreten kann.

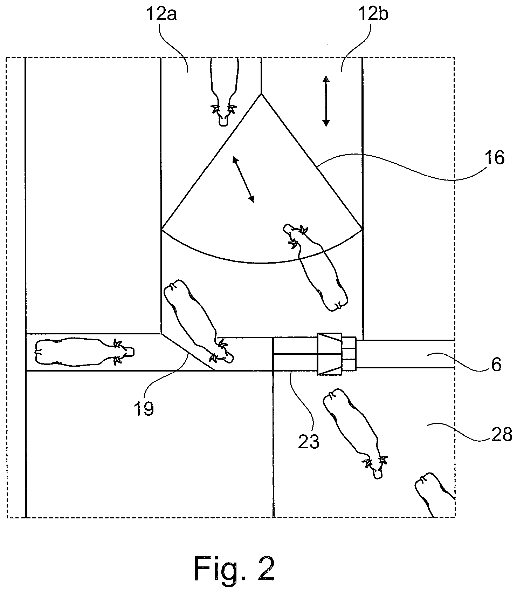

In der Fig. 2 ist vergrößert das Zusammenspiel zwischen dem Gang 12, dem Rundgang 6 und dem Zugang 28 zum Melkbereich dargestellt. Aus der Darstellung nach Fig. 2 ist ersichtlich, dass der Laufgang 12a durch die Weiche 16 freigegeben ist. Der Laufgang 12b ist durch die Weiche 16 gesperrt. Die Tiere gelangen über den Laufgang 12a von dem entsprechenden Sektor zum Rundgang 6 und umgekehrt.

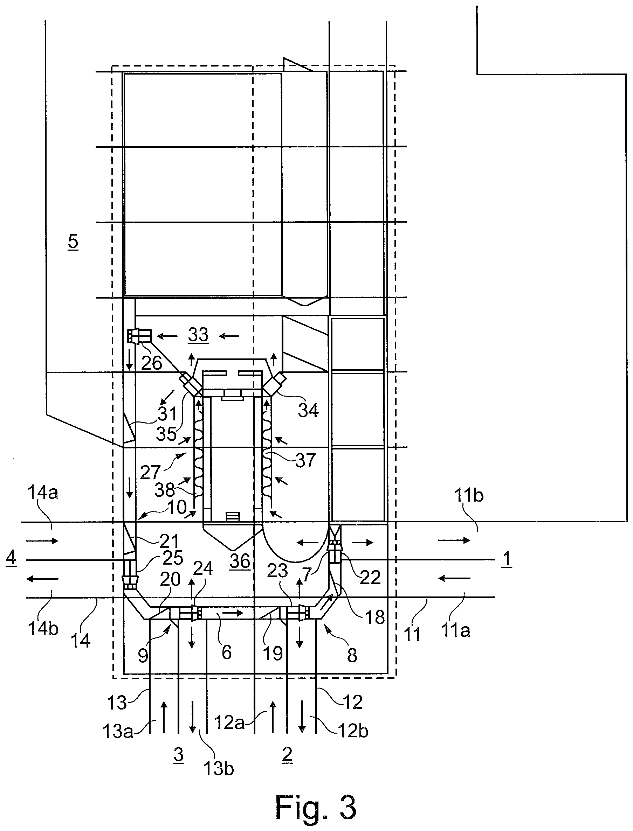

Fig. 3 zeigt ein zweites Ausführungsbeispiel einer Vorrichtung zum gelenkten Tierverkehr. Die Vorrichtung umfasst Sektoren 1-5. Bei den Sektoren 1-4 handelt es sich vorzugsweise um Weiden. Der Sektor 5 kann ein Separationsbereich sein. Mit dem Bezugszeichen 6 ist ein Rundgang bezeichnet. Die Sektoren 1-4 sind jeweils über einen Gang 11-14 verbunden. Der Sektor 5 ist unmittelbar an den Rundgang 6 angeschlossen. Jeder Gang 11-14 weist einen Laufgang 11a-14a auf. Durch die Laufgänge 11a-14a können Tiere aus dem betreffenden Sektor in den Rundgang 6 gelangen. Durch die Laufgänge 11b-14b können die Tiere aus dem Rundgang 6 in den jeweiligen Sektor 1-4 gelangen. Die Sektoren 1-4 können sich auch unmittelbar an den Rundgang 6 anschließen.

Jeweils ein Abschnitt 7-10 bildet einen Übergangsbereich von einem Sektor 1-4 in den Rundgang 6. Jeder Übergangsbereich weist ein Schwenktor 18-21 auf. Jedes Schwenktor 18-21 ermöglicht einen Eintritt eines Tiers aus einem Sektor 1-4 über einen Gang 11a-14a in den Rundgang 6. Der Übergangsbereich vom Sektor 5 zum Rundgang 6 weist ein Schwenktor 31 auf. Die Schwenktore 18-21 und 31 sind derart angeordnet, dass die Laufrichtung des Tiers bzw. der Tiere in dem Rundgang 6 vorgegeben ist. In dem dargestellten Ausführungsbeispiel laufen die Tiere entgegen dem Uhrzeigersinn, was durch Pfeile im Rundgang 6 der Fig. 3 angedeutet ist. Benachbart zu dem jeweiligen Schwenktor 18-21 und 26 ist in Laufrichtung der Tiere betrachtet jeweils eine Selektionseinheit 22-26 vorgesehen. Mittels der Selektionseinheit kann ein sich im Rundgang befindendes Tier entweder über einen Gang in den Sektor überführt werden. Alternativ besteht auch die Möglichkeit, dass die Selektionseinheit ein Weiterlaufen des Tiers im Rundgang ermöglicht. Eine jede Selektionseinheit weist entsprechend verschwenkbare Tore oder dergleichen auf, durch die der Weg für ein Tier freigegeben oder gesperrt wird.

Die Tiere tragen vorzugsweise Identifikationsmittel, die mit entsprechenden an den Selektionseinheiten 22-26 vorgesehenen Identifikationseinheiten kommunizieren können, so dass die Selektionseinheiten in Abhängigkeit von tierindividuellen Vorgaben aktiviert bzw. deaktiviert werden und so ein gelenkter Tierverkehr erzielt wird. Dies ist nicht zwingend notwendig. Es besteht auch die Möglichkeit, dass die Selektionseinheiten 22-26 manuell oder halbautomatisch betätigbar sind.

Durch die Schwenktore 18-21 und 31 und die Selektionseinheiten 22-26 ist die Laufrichtung des Tiers bzw. der Tiere bestimmbar. Es wird im Wesentlichen ein kreuzungsfreier Tierverkehr erreicht.

Die Fig. 3 zeigt einen Melkbereich 27. Der Melkbereich 27 weist mehrere Melkplätze auf. Die Tiere verlassen den Melkbereich durch den Weg 37 bzw. 38 zu den Selektionseinheiten 34 bzw. 35. Die Selektionseinheiten 34 und 35 sind so ausgebildet, dass diese in Abhängigkeit von der tierindividuellen Vorgabe das Tier entweder zurück in einen Wartebereich 36 oder in einen Sammelbereich 33 gelangen kann. Der Sammelbereich 33 ist Teil des Rundgangs 6. Über die Selektionseinheit 26 gelangen die Tiere aus dem Sammelbereich 33 in den Rundgang 6.

Aus der Darstellung nach Fig. 3 ist erkennbar, dass die Selektionseinheiten 22-25 so ausgebildet sind, dass die Tiere aus einem Sektor in den Wartebereich 36 gelangen können. Die Tiere können alternativ den Rundgang 6 beschreiten oder zurück in den Sektor geleitet werden. Die Selektionseinheiten 22-25 ermöglichen somit den Tieren, drei unterschiedliche Wege zu beschreiten. Dies sei exemplarisch in Zusammenhang mit einem Tier, welches sich bspw. im Sektor 2 befindet, nachstehend noch einmal näher erläutert. Befindet sich ein Tier im Sektor 2, so kann das Tier über den Laufgang 12a und durch Verschwenken des Schwenktors 19 in einem Abschnitt des Rundgangs 6 gelangen. Insbesondere beim Betreten der Selektionseinheit 23 wird das Tier identifiziert. In Abhängigkeit von den in einer nicht dargestellten Datenbank hinterlegten Informationen über das Tier wird die Selektionseinheit entsprechend aktiviert. Ist die Information hinterlegt, dass das Tier melkberechtigt ist, so wird in der Selektionseinheit nur der Weg in den Wartebereich 36 freigegeben. Der weitere Weg im Rundgang sowie der Weg zum Laufgang 12b werden gesperrt. Das Tier, welches sich im Wartebereich 36 befindet, kann zum Melkbereich 27 gelangen. Der Melkbereich 27 weist vorzugsweise mehrere Melkplätze auf. Betritt das Tier einen Melkplatz, wird es gemolken. Anschließend gelangt es bspw. über den Gang 38 in die Selektionseinheit 35. Soll das Tier den Melkbereich 27 verlassen, so wird der Zugang zum Sammelbereich 33 freigegeben. Über die Selektionseinheit 26 kann das Tier den Sammelbereich 33 entweder bspw. in den Sektor 5 oder in den Rundgang 6 verlassen. Das Tier kann den Rundgang durchschreiten. Hierbei passiert das Tier die Selektionseinheit 25. Ist das Tier in der Selektionseinheit 25 erkannt worden, so wird die Selektionseinheit 25 entsprechend den zu dem Tier hinterlegten Daten aktiviert. Ist hinterlegt, dass das Tier nun in den Sektor 4 gelangen kann, so wird der Zugang zum Sektor 4 in der Selektionseinheit 25 aktiviert, so dass das Tier vom Rundgang 6 in den Laufgang 14b abgehen kann.

Wenn das Tier, welches den Sektor 2 verlassen hat, sich in der Selektionseinheit 23 befindet, noch nicht melkberechtigt ist, so wird der Zugang zum Melkbereich 27 gesperrt und bspw. der Zugang zum Laufgang 12b freigegeben, so dass das Tier in den Sektor 2 zurückgeführt werden kann. Soll das Tier, welches aus dem Sektor 2 über die Selektionseinheit 23 verlassen hat, zum Sektor 1 gelangen, so wird der weitere Weg im Rundgang von der Selektionseinheit 23 freigegeben. Das Tier betritt dann im weiteren Verlauf die Selektionseinheit 22 und gelangt über den Laufgang 11b in den Sektor 1.

Die Selektionseinheiten 22-26 sind vorzugsweise gleich ausgebildet, so dass der konstruktive und apparative Aufwand zur Realisierung der Vorrichtung zum gelenkten Tierverkehr gering gehalten werden kann. Die erfindungsgemäße Vorrichtung hat auch den Vorteil, dass die Anzahl der Sektoren ohne eine Verkomplizierung des Wegs für die Tiere im Rahmen des Praktischen erweitert werden kann.

### Bezugszeichenliste

- 1-5: Sektor
- 6: Rundgang
- 7-10: Abschnitt
- 8-14: Gang
- 11a-14a: Laufgang
- 11b-14b: Laufgang
- 15-17: Weiche
- 18-21: Schwenktor
- 22-26: Selektionseinheit
- 27: Melkbereich
- 28: Zugang
- 29: Ausgang
- 30: Schwenktor
- 31: Schwenktor
- 33: Sammelbereich
- 34, 35: Selektionseinheit
- 36: Wartebereich
- 37, 38: Weg

## Patentansprüche

1. Vorrichtung zum gelenkten Tierverkehr mit
Wenigstens drei Sektoren (1, 2, 3, 4, 5),
einem Rundgang (6), der mit den Sektoren (1, 2, 3, 4, 5) verbunden ist,
mit jeweils einem Abschnitt (7, 8, 9, 10) des Rundgangs (6), der einen Übergangsbereich von einem Sektor (1, 2, 3, 4, 5) in den Rundgang (6) bildet, wobei der Abschnitt (7, 8, 9, 10) ein Schwenktor (18, 19, 20, 21), welches einen Eintritt eines Tieres aus einem Sektor (1, 2, 3, 4, 5) in den Rundgang (6) und nur eine Laufrichtung des Tieres in dem Rundgang (6) ermöglicht, sowie in Laufrichtung des Tieres betrachtet dem Schwenktor (18, 19, 20, 21) nachgeordnete Selektionseinheit (22, 23, 24, 25, 26), mittels derer das Tier in den Sektor (1, 2, 3, 4, 5) gelenkt wird oder den Rundgang (6) weiter laufen kann.

2. Vorrichtung nach Anspruch 1, **dadurch gekennzeichnet, dass** wenigstens ein Melkbereich (27) vorgesehen ist, der ein Teil des Rundgangs (6) ist.

3. Vorrichtung nach Anspruch 1, **dadurch gekennzeichnet, dass** ein Melkbereich (27) vorgesehen ist, der über einen Zugang (28) und einen Ausgang (29) mit dem Rundgang (6) verbunden ist, wobei eine Selektionseinheit (23) im Rundgang (6) vorgesehen ist, mittels derer ein Tier in den Melkbereich (27) gelenkt wird oder den Rundgang (6) weiter laufen kann, und im Ausgang (29) ein Schwenktor (30) angeordnet ist, welches einen Eintritt eines Tieres aus dem Melkbereich (27) in den Rundgang (6) und nur eine Laufrichtung des Tieres in dem Rundgang (6) ermöglicht.

4. Vorrichtung nach wenigstens einem der Ansprüche 1 bis 3, **dadurch gekennzeichnet, dass** eine Steuereinrichtung vorgesehen ist, mittels derer die Selektionseinheiten (22-26, 34, 35) und/oder die Schwenktore (18-21, 30, 31) automatisch gesteuert werden.

5. Vorrichtung nach Anspruch 4, **dadurch gekennzeichnet, dass** die Selektionseinheiten (22-26, 34, 35) und/oder die Schwenktore (18-21, 30, 31) Mittel zur Identifikation von Tieren aufweisen, wobei die Mittel signaltechnisch mit der Steuereinrichtung verbunden sind.

## Claims

1. Device for directed animal traffic, comprising
at least three sectors (1, 2, 3, 4, 5),
a round passage (6) which is connected to the sectors (1, 2, 3, 4, 5), in each case having a segment (7, 8, 9, 10) of the round passage (6), which segment forms a transition region from a sector (1, 2, 3, 4, 5) into the round passage (6), wherein the segment (7, 8, 9, 10) has a swinging gate (18, 19, 20, 21), which permits entry of an animal from a sector (1, 2, 3, 4, 5) into the round passage (6) and only one direction of movement of the animal in the round passage (6), and a selection unit (22, 23, 24, 25, 26) which is arranged downstream of the swinging gate (18, 19, 20, 21), as viewed in the direction of movement of the animal, and by means of which the animal is directed into the sector (1, 2, 3, 4, 5) or can move further along the round passage (6).

2. Device according to Claim 1, **characterized in that** at least one milking area (27) is provided which is part of the round passage (6).

3. Device according to Claim 1, **characterized in that** a milking area (27) is provided which is connected via an entrance (28) and an exit (29) to the round passage (6), wherein a selection unit (23) is provided in the round passage (6), by means of which an animal is directed into the milking area (27) or can move further along the round passage (6), and a swinging gate (30) is arranged in the exit (29), said swinging gate permitting entry of an animal from the milking area (27) into the round passage (6) and only one direction of movement of the animal in the round passage (6).

4. Device according to at least one of Claims 1 to 3, **characterized in that** a control device is provided, by means of which the selection units (22-26, 34, 35) and/or the swinging gates (18-21, 30, 31) are automatically controlled.

5. Device according to Claim 4, **characterized in that** the selection units (22-26, 34, 35) and/or the swinging gates (18-21, 30, 31) have means for identifying animals, wherein the means are connected by signal technology to the control device.

## Revendications

1. Dispositif de circulation guidée d'animaux, le dispositif comprenant
au moins trois secteurs (1, 2, 3, 4, 5),
un couloir circulaire (6) qui est relié aux secteurs (1, 2, 3, 4, 5),
le couloir circulaire (6) comportant pour chacun desdits secteurs une partie (7, 8, 9, 10), qui forme une zone de transition allant d'un secteur (1, 2, 3, 4, 5) au couloir circulaire (6), la partie (7, 8, 9, 10) comportant une porte pivotante (18, 19, 20, 21) qui permet à un animal venant d'un secteur (1, 2, 3, 4, 5) d'entrer dans le couloir circulaire (6) et de se déplacer dans une seule direction dans le couloir circulaire (6), et une unité de sélection (22, 23, 24, 25, 26) qui est disposée en aval de la porte pivotante (18, 19, 20, 21) par référence au sens de déplacement de l'animal et qui permet de diriger l'animal vers le secteur (1, 2, 3, 4, 5) ou l'amener à continuer dans le couloir circulaire (6).

2. Dispositif selon la revendication 1, **caractérisé en ce qu'**au moins une zone de traite (27) est prévue qui fait partie du couloir circulaire (6).

3. Dispositif selon la revendication 1, **caractérisé en ce qu'**une zone de traite (27) est prévue qui est reliée au couloir circulaire (6) par un accès (28) et une sortie (29), une unité de sélection (23) étant prévue dans le couloir circulaire (6) au moyen de laquelle un animal est dirigé vers la zone de traite (27) ou est amené à continuer dans le couloir circulaire (6) et une porte pivotante (30) étant disposée dans la sortie (29), laquelle porte pivotante permet à un animal provenant la zone de traite (27) d'entrer dans le couloir circulaire (6) et de se déplacer dans une seule direction dans le couloir circulaire (6).

4. Dispositif selon l'une au moins des revendications 1 à 3, **caractérisé en ce qu'**un dispositif de commande est prévu au moyen duquel les unités de sélection (22-26, 34, 35) et/ou les portes pivotantes (18-21, 30, 31) sont commandées automatiquement.

5. Dispositif selon la revendication 4, **caractérisé en ce que** les unités de sélection (22-26, 34, 35) et/ou les portes pivotantes (18-21, 30, 31) comportent des moyens d'identification d'animaux, lesdits moyens étant reliés au dispositif de commande par une technique de signal.
